# FASCICULE DE BREVET EUROPEEN

(11) **EP 0 886 627 B1**
(45) Date de publication et mention de la délivrance du brevet: **24.07.2002**
(21) Numéro de dépôt: 97952081.4
(22) Date de dépôt: 17.12.1997
(51) Int. Cl.: C04B 35/83, F16D 69/02

(54) **PROCEDE DE FABRICATION DE PIECES, NOTAMMENT DE DISQUES DE FREINS, EN MATERIAU COMPOSITE CARBONE-CARBONE**
VERFAHREN ZUR HERSTELLUNG VON TEILEN, INSBESONDERE VON BREMSSCHEIBEN, AUS KOHLENSTOFF-KOHLENSTOFF-VERBUNDWERKSTOFF
METHOD FOR MAKING PARTS, IN PARTICULAR BRAKE DISKS, IN COMPOSITE CARBON-CARBON MATERIAL

(30) Priorité: 17.12.1996 FR 9615487
(43) Date de publication de la demande: 30.12.1998
(73) Titulaire: MESSIER BUGATTI, 78140 Velizy Villacoublay (FR)
(72) Inventeur: DUVAL, Renaud, F-69380 Les Chères (FR); LHERM, Eric, F-01800 Rigneux-le-Franc (FR)
(74) Mandataire: Joly, Jean-Jacques
(86) Numéro de dépôt international: FR9702323
(87) Numéro de publication internationale: WO9827026

(56) Documents cités:
- WO-A-91/01397
- WO-A-92/01648
- FR-A- 2 196 966

## Description

### Domaine de l'invention

La présente invention concerne la fabrication de pièces en matériau composite carbone-carbone (C-C), en particulier la fabrication de disques de freins.

### Arrière-plan de l'invention

Des pièces en matériau composite C-C sont fabriquées en élaborant une préforme fibreuse ayant une forme voisine de celle de la pièce à fabriquer et en densifiant la préforme par introduction d'une matrice au sein de la porosité de la préforme.

La préforme est élaborée à partir d'une texture fibreuse de base, par exemple par bobinage d'une bande de texture de base en couches superposées ou par empilement ou nappage de strates de la texture de base. La texture fibreuse de base est par exemple un feutre, un tissu, un tricot, une tresse, une nappe unidirectionnelle de fils, câbles ou torons, ou encore une texture multicouches formée de plusieurs nappes unidirectionnelles superposées avec des directions différentes et liées entre elles par aiguilletage léger.

Le document GB-A-1 447 029 décrit la réalisation d'une telle texture fibreuse de base multicouches. Les différentes couches aiguilletées peuvent être imprégnées par une résine thermoplastique et comprimées afin d'obtenir une texture fibreuse consolidée utilisable ensuite pour la réalisation de matériaux composites.

La densification de la préforme par la matrice carbone peut être réalisée par infiltration chimique en phase vapeur et/ou par voie liquide. L'infiltration chimique en phase vapeur consiste à placer la préforme dans une enceinte où est introduite une phase gazeuse contenant un ou plusieurs précurseurs gazeux du carbone. Ceux-ci sont choisis typiquement parmi les alcanes, les alkyles et les alcènes, des précurseurs couramment utilisés étant le méthane et/ou le propane. Les conditions de température et de pression dans l'enceinte sont déterminées pour permettre à la phase gazeuse de diffuser au sein de la porosité de la préforme et de former un dépôt de carbone pyrolytique sur les fibres par décomposition du ou des précurseurs de carbone qu'elle contient. La voie liquide consiste à imprégner la préforme par une composition contenant un précurseur de carbone à l'état liquide, par exemple du brai ou une résine à taux de coke non nul. La transformation du précurseur est réalisée par traitement thermique donnant un coke. Ainsi, par exemple, le document WO-A-92/01648 décrit un procédé de fabrication de disques de freins en C/C consistant à associer des strates de texture fibreuse avec un précurseur de carbone polymérisable et à réaliser un traitement thermique, au moins dans une première phase sous pression, afin de consolider la préforme et de transformer le précurseur pour obtenir le matériau C/C désiré.

Pour procurer une cohésion à la préforme et une résistance au délaminage à la pièce fabriquée, il est toutefois souhaitable de lier entre elles les couches ou strates qui la constituent. Cette liaison est avantageusement réalisée par aiguilletage, comme décrit par exemple dans les documents US-A-4 790 052, FR-A-2 626 294 et FR-A-2 726 013.

Un autre procédé décrit dans le document WO-A-91/01397 consiste à former une structure fibreuse, par exemple par empilement de strates, à comprimer la structure fibreuse afin d'obtenir une préforme ayant une forme voisine de celle d'une pièce à fabriquer, et à maintenir la préforme dans cet état comprimé par une série d'aiguilletages réalisés d'un côté et de l'autre de la préforme, sur toute son épaisseur, ou par couture au moyen d'un fil traversant la préforme.

Encore un autre procédé décrit dans le document FR-A-2 619 104 consiste à réaliser un imprégné tridimensionnel par superposition et aiguilletage de strates de texture fibreuse imprégnées par une composition comprenant une résine précurseur de carbone. Le préimprégné tridimensionnel est ensuite mis en forme sous pression puis soumis à un traitement thermique pour carboniser le précurseur et obtenir un composite à matrice carbone.

Pour la fabrication de disques de freins en matériau composite C-C, des préformes fibreuses annulaires sont généralement réalisées par aiguilletage de strates d'une texture fibreuse de base comprenant un tissu ou un complexe de plusieurs nappes unidirectionnelles de fils, câbles ou torons, éventuellement associés à un voile de fibres ou un feutre. Les strates sont aiguilletées une à une afin d'obtenir une densité d'aiguilletage prédéterminée dans l'épaisseur de la préforme. La densification des préformes est habituellement réalisée par infiltration chimique en phase vapeur, les préformes aiguilletées ayant une tenue suffisante pour éviter le recours à des outillages de maintien.

Des disques de freins réalisés de cette façon sont utilisés pour des freins à disques d'avions ou pour des freins de véhicules automobiles de compétition en F1 où ils donnent toute satisfaction.

Dans d'autres applications telles que le freinage de véhicules ferroviaires, de véhicules industriels ou de véhicules automobiles de tourisme, où les conditions d'utilisation sont pourtant souvent beaucoup moins sévères, des essais effectués par la déposante avec ces mêmes disques n'ont pas été aussi satisfaisants. En particulier, il a pu être noté l'apparition de vibrations indésirables, des irrégularités dans le couple de freinage et, parfois, une usure supérieure à ce qui aurait pu être espéré. En outre, les coûts de fabrication sont élevés et difficilement compatibles avec une utilisation généralisée sur des véhicules ferroviaires ou des véhicules automobiles industriels ou de tourisme de série.

La présente invention a pour but de remédier à ces inconvénients et propose à cet effet, d'une façon plus générale, un procédé convenant en particulier, mais non exclusivement, à la fabrication de disques de freins destinés à diverses applications.

En particulier, l'invention a pour but de fournir un procédé permettant d'obtenir des disques de freins en matériau composite C-C qui présentent de bonnes propriétés mécaniques et tribologiques et sont susceptibles d'être utilisés dans différentes conditions sans engendrer de vibrations indésirables et sans présenter une usure inacceptable.

### Brève description de l'invention

Ce but est atteint grâce à un procédé de fabrication d'une pièce en matériau composite carbone-carbone comprenant la formation d'une structure fibreuse tridimensionnelle, la compression de la structure fibreuse pour obtenir une préforme fibreuse ayant une forme voisine de celle de la pièce à fabriquer, le maintien de la préforme dans son état comprimé et la densification de la préforme, procédé selon lequel, conformément à l'invention,
- la structure fibreuse tridimensionnelle est formée en superposant des couches de feutre et en les liant entre elles par aiguilletage,
- la compression de la structure fibreuse est réalisée de manière à obtenir une préforme ayant un taux volumique de fibres au moins égal à 20 %, et
- la préforme est maintenue dans son état comprimé par consolidation, après imprégnation par une composition liquide contenant un agent de liaison capable de lier les fibres de la préforme entre elles.

De préférence, la structure fibreuse tridimensionnelle est formée en superposant et aiguilletant des couches de feutre ayant un taux volumique de fibres compris entre 7 % et 15 %, et constituées de fibres ayant une longueur moyenne comprise entre 10 mm et 100 mm.

Les couches de feutre sont avantageusement aiguilletées une à une au fur et à mesure de leur superposition. De préférence, le nombre de coups d'aiguilles par unité de surface ainsi que la profondeur de pénétration des aiguilles dans la structure fibreuse en cours de formation sont contrôlés de manière à obtenir une densité d'aiguilletage prédéterminée dans l'épaisseur de la structure fibreuse, avantageusement une densité d'aiguilletage volumique constante conférant à la structure fibreuse un caractère quasi isotrope.

Le maintien de la préforme à l'état comprimé est avantageusement réalisé par injection de la composition liquide contenant un agent de liaison à l'intérieur d'un outillage dans lequel la préforme est comprimée l'injection pouvant être réalisée avant ou après compression.

L'agent de liaison est par exemple une résine, de préférence une résine ayant un taux de coke non nul qui est carbonisée par traitement thermique effectué sur la préforme avant sa densification par infiltration chimique en phase vapeur.

Lorsqu'il est appliqué à la fabrication de disques de freins annulaires en matériau composite C-C, le procédé permet d'obtenir des produits qui présentent les qualités mécaniques et tribologiques requises et des essais effectués par la déposante montrent une stabilité du couple de freinage et une faible usure dans différentes conditions d'utilisation. En outre, on ne constate pas l'apparition de vibrations indésirables. Cela peut s'expliquer par le fait que la réalisation d'un renfort fibreux par un feutre confère au produit obtenu une moindre rigidité transversale que dans le cas où le renfort comporte des strates bidimensionnelles de tissu ou de nappes unidirectionnelles superposées. La probabilité d'une usure irrégulière des faces frottantes, source de vibrations, s'en trouve amoindrie.

Une pièce annulaire en composite C-C est fabriquée à partir d'une structure fibreuse tridimensionnelle annulaire. Celle-ci peut être formée par bobinage d'une bande de feutre en couches superposées liées par aiguilletage, par exemple par bobinage hélicoïdal en spires à plat d'une bande de feutre déformable ou par bobinage d'une bande de feutre en couches superposées sur un mandrin cylindrique. En variante, la structure annulaire peut être formée par empilement à plat de strates de feutre liées entre elles par aiguilletage. Les strates peuvent être pleines, auquel cas la structure annulaire est obtenue par découpe des strates empilées et aiguilletées. Il est possible aussi de partir de strates annulaires prédécoupées.

Le feutre utilisé pour la mise en oeuvre du procédé selon l'invention est de préférence en fibres de carbone. Il pourrait être en fibres de précurseur de carbone, auquel cas la transformation du précurseur en carbone est réalisée par traitement thermique sur la préforme à l'état aiguilleté, voire même à l'état comprimé. Des fibres de carbone ou de précurseur de carbone pouvant convenir sont des fibres à base de polyacrylonitrile préoxydé, des fibres à base phénolique, des fibres à base cellulosique, des fibres à base brai, etc.

Des feutres formés de fibres de différentes natures peuvent être utilisés pour différentes parties de la structure fibreuse. Ainsi, dans le cas de la fabrication de disques de freins, on peut utiliser un feutre en fibres de carbone ou de précurseur de carbone à base de polyacrylonitrile (PAN) préoxydé ou à base brai anisotrope pour la partie de la structure correspondant à l'âme du disque et un feutre formé au moins en partie de fibres de carbone ou de précurseur de carbone à base phénolique ou à base cellulosique ou à base brai isotrope pour la ou chaque partie de la structure correspondant à une partie de friction du disque. Des fibres de carbone à base PAN préoxydé ou brai anisotrope sont des fibres haute résistance tandis que des fibres de carbone à base phénolique, cellulosique ou brai isotrope sont des fibres bas module. L'utilisation de fibres bas module soit exclusivement, soit en mélange avec des fibres haute résistance au niveau de la ou des faces frottantes du disque contribue à diminuer encore la rigidité transversale et à s'opposer à une usure irrégulière source de vibrations.

### Brève description des dessins

Des exemples de mise en oeuvre du procédé selon l'invention seront décrits ci-après à titre indicatif mais non limitatif. Il sera fait référence aux dessins annexés, sur lesquels:
- la figure 1 montre les étapes successives de mise en oeuvre d'un procédé selon l'invention ;
- les figures 2A et 2B illustrent la formation d'une structure fibreuse tridimensionnelle annulaire selon un premier mode de réalisation de l'invention ;
- les figures 3A et 3B illustrent la formation d'une structure fibreuse selon un deuxième mode de réalisation de l'invention ;
- les figures 4A et 4B illustrent la formation d'une structure fibreuse selon un troisième mode de réalisation de l'invention ;
- les figures 5A et 5B illustrent la formation d'une structure fibreuse selon un quatrième mode de réalisation de l'invention ; et
- les figures 6A à 6C illustrent la compression d'une structure fibreuse et le maintien à l'état comprimé de la préforme obtenue, lors de la mise en oeuvre d'un procédé selon l'invention.

### Description détaillée de modes préférés de réalisation

Dans la description qui suit, on envisage la fabrication de disques de freins en composite C-C, étant entendu que le procédé selon l'invention est applicable à la fabrication d'autres pièces en composite C-C non nécessairement de forme annulaire, comme cela apparaîtra immédiatement à l'homme de l'art.

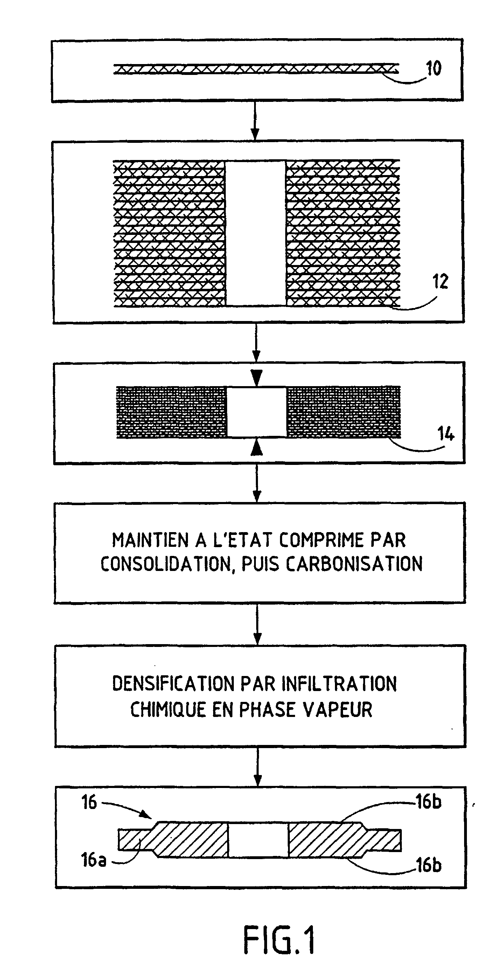

Les différentes étapes de la fabrication d'un disque de frein en composite C-C par un premier mode de mise en oeuvre d'un procédé conforme à l'invention sont essentiellement les suivantes (figure 1) :
- fourniture d'une texture fibreuse de base sous forme d'un feutre 10 de fibres de carbone ou de précurseur de carbone,
- formation d'une structure fibreuse tridimensionnelle 12 par superposition et aiguilletage de couches de feutre 10,
- compression de la structure 12 pour obtenir une préforme 14 ayant une forme voisine de celle du disque de frein à réaliser,
- maintien de la préforme 14 à l'état comprimé par consolidation, après imprégnation par une composition liquide contenant un agent de liaison,
- densification de la préforme 14 par exemple au moins partiellement par infiltration chimique en phase vapeur, ou autre technique de densification, et
- usinage de la préforme densifiée pour obtenir le disque de frein 16 recherché.

L'imprégnation par la composition liquide contenant un agent de liaison peut être réalisée avant ou après compression de la structure fibreuse.

Le feutre 10 est réalisé de façon conventionnelle à partir de fibres de carbone relativement courtes, c'est-à-dire de fibres ayant de préférence une longueur moyenne comprise entre 10 mm et 100 mm. Le feutre ainsi obtenu a un taux volumique de fibres compris environ entre 7 % et 15 %, le taux volumique de fibres étant la fraction du volume apparent du feutre effectivement occupée par les fibres, ce qui correspond à une masse volumique comprise environ entre 100 et 200 kg/m³.

Les fibres utilisées sont des fibres de carbone, obtenues par carbonisation de fibres de précurseur de carbone, ou des fibres de précurseur de carbone non encore carbonisées. Les fibres de précurseurs de carbone utilisables dans les deux cas sont des fibres de polyacrylonitrile préoxydé, des fibres phénoliques, des fibres cellulosiques, des fibres brai, etc. Plusieurs précurseurs différents pourront être utilisés pour un même feutre. En particulier, on pourra associer des fibres à précurseur polyacrylonitrile préoxydé et/ou à précurseur brai anisotrope qui, après carbonisation, donnent des fibres de carbone haute résistance, avec des fibres à précurseur phénolique et/ou à précurseur cellulosique et/ou à précurseur brai isotrope qui, après carbonisation, donnent des fibres de carbone bas module.

Selon le mode de formation de structure fibreuse choisi, le feutre 10 peut se présenter sous différentes formes telles que bande continue plus ou moins large, strates pleines ou strates annulaires prédécoupées.

Différents modes de formation de la structure fibreuse tridimensionnelle annulaire peuvent être utilisés, qui comprennent tous la superposition et l'aiguilletage de plusieurs couches de feutre, le nombre de couches étant choisi en fonction de l'épaisseur et du taux volumique de fibres désirés pour la préforme, après compression.

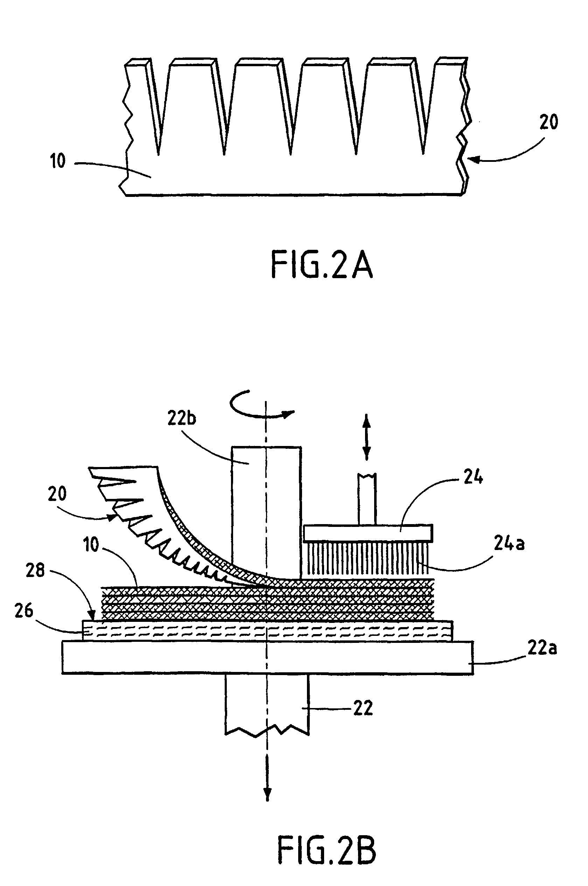

Selon le mode de réalisation des figures 2A et 2B, la structure est formée par bobinage hélicoïdal à plat en spires superposées d'une bande ou ruban déformable 20 du feutre 10. La déformabilité de la bande 20 lui est conférée afin de permettre un bobinage à plat sans créer de surépaisseurs notables au niveau de la circonférence intérieure de la structure. A cet effet, des entailles 20a en forme sensiblement de V sont pratiquées à partir du côté de la bande 20 destiné à former cette circonférence intérieure, les entailles s'étendant sur la plus grande partie de la largeur de la bande (figure 2A).

L'aiguilletage de la bande 20 est réalisé de préférence au fur et à mesure de son bobinage, de sorte que chaque spire est aiguilletée sur la structure sous-jacente. A cet effet, la structure annulaire en cours de formation repose sur un support rotatif horizontal 22 comprenant un plateau annulaire 22a du centre duquel fait saillie un moyeu 22b (figure 2B). La rotation du support 22 provoque l'enroulement à plat de la bande 20 autour du moyeu 22b.

Au moins une planche à aiguilles 24 s'étendant horizontalement sur la largeur de la bande 12 est disposée radialement par rapport à l'axe vertical du support 22 immédiatement en aval de la position où la bande 12 vient au contact de la structure annulaire en cours de formation. La planche à aiguilles est de façon classique animée d'un mouvement alternatif vertical au cours duquel les aiguilles pénètrent dans les spires superposées de la structure en cours de formation.

De préférence, mais non nécessairement, l'aiguilletage est réalisé de manière à obtenir une densité d'aiguilletage sensiblement uniforme dans tout le volume de la structure annulaire. A cet effet, la densité surfacique d'aiguilletage, c'est-à-dire le nombre de coups d'aiguilles par unité de surface, et la profondeur d'aiguilletage sont maintenues sensiblement constantes. Une densité surfacique constante est obtenue en donnant à l'ensemble des aiguilles 24a de la planche 24 la forme d'un secteur dans lequel les aiguilles sont réparties uniformément, afin de compenser la différence de trajet linéaire entre la circonférence intérieure et la circonférence extérieure de la structure annulaire lors de la rotation de celle-ci. Une profondeur d'aiguilletage sensiblement constante, s'étendant de préférence à travers plusieurs spires superposées, est obtenue en abaissant progressivement le plateau rotatif 22 au fur et à mesure du bobinage.

Afin de permettre aux aiguilles 24a de pénétrer sur la distance requise dans les premières spires de la bande 20 sans être endommagées au début du bobinage, le plateau 22 est muni d'un revêtement d'embase sous forme par exemple d'un feutre 26 de polypropylène revêtu d'une feuille de séparation 28 en matière plastique, par exemple en élastomère. Le feutre 26 permet la pénétration des aiguilles mais la feuille 28 empêche dans une large mesure le passage de fibres provenant du feutre 10, de sorte que la structure annulaire peut être aisément retirée du plateau 22.

L'alimentation de la bande 20 est interrompue lorsque l'épaisseur désirée pour la structure annulaire est atteinte. Des passes d'aiguilletage de finition pourront alors être réalisées en continuant de faire tourner et éventuellement d'abaisser le plateau 22, de sorte que les dernières spires bobinées "voient" le même nombre de coups d'aiguilles que les précédentes, et que la structure annulaire présente une densité d'aiguilletage volumique constante dans toute son épaisseur.

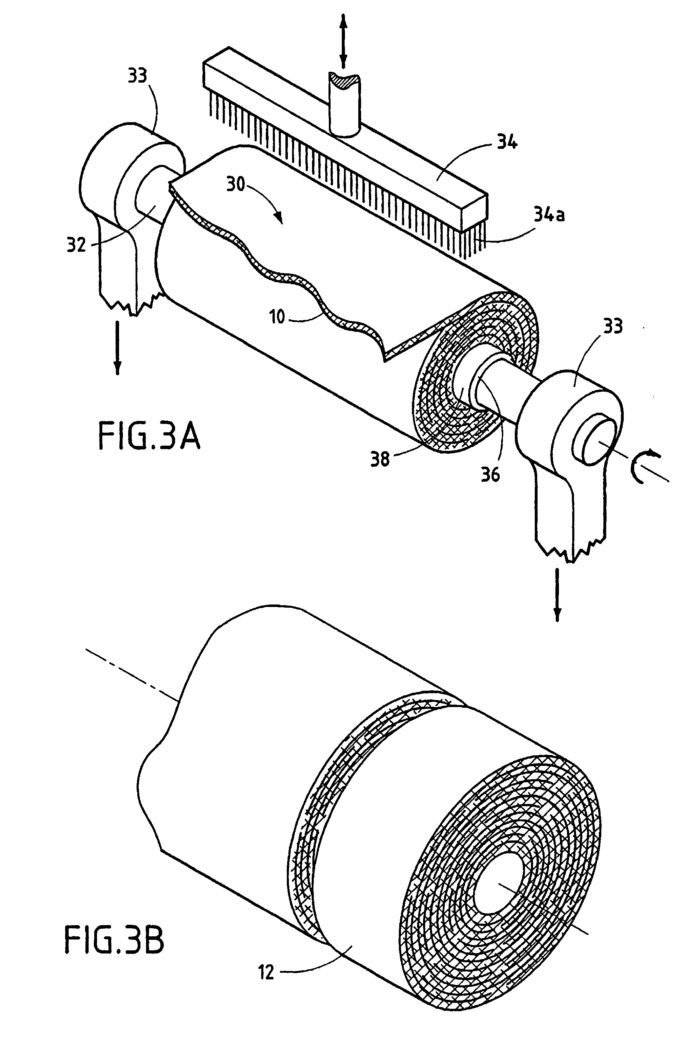

Les figures 3A et 3B illustrent schématiquement un autre mode de formation d'une structure fibreuse tridimensionnelle annulaire.

Une bande 30 de feutre 10 est bobinée en couches superposées sur un mandrin cylindrique rotatif 32 d'axe horizontal et est aiguilletée au fur et à mesure de son bobinage.

Le mandrin 32 est muni d'un revêtement d'embase annulaire comprenant un feutre 36 et une feuille de séparation 38 similaires à ceux utilisés dans le mode de réalisation de la figure 2B. En variante, la bande de feutre pourrait être bobinée sur un mandrin fixe muni de perforations au regard des aiguilles, le bobinage étant réalisé par entraînement de la bande par contact tangentiel avec un rouleau rotatif.

L'aiguilletage est réalisé au moyen d'une planche à aiguilles 34 qui s'étend sur la largeur de la bande 30 en un emplacement situé immédiatement en aval de la position où la bande 30 vient au contact des couches déjà bobinées.

Les aiguilles 34a de la planche 34 sont réparties uniformément le long de celle-ci afin d'obtenir une densité surfacique d'aiguilletage constante. La profondeur d'aiguilletage est maintenue constante en déplaçant progressivement le mandrin 32. Ainsi, dans l'exemple illustré, la planche à aiguilles s'étend le long de la génératrice supérieure du manchon 39 formé par les spires superposées de bande 30 et le mandrin 32 est porté par un support 33 qui peut être abaissé progressivement.

Le bobinage de la bande 30 est interrompu lorsque l'épaisseur des spires superposées et aiguilletées atteint la valeur correspondant à la dimension radiale désirée pour la structure tridimensionnelle annulaire, c'est-à-dire à la différence entre ses rayons extérieur et intérieur. Des passes d'aiguilletage de finition peuvent être réalisées comme décrit plus haut.

Ensuite, après démontage du manchon aiguilleté obtenu, celui-ci peut être tronçonné suivant des plans radiaux (figure 3B), par exemple par découpe au jet d'eau, afin d'obtenir les structures annulaires recherchées 12. En variante, le tronçonnage peut être réalisé après compression en direction axiale, maintien à l'état comprimé par imprégnation par une composition liquide contenant un agent de liaison et carbonisation éventuelle, auquel cas des préformes comprimées en fibres de carbone sont obtenues prêtes à être densifiées.

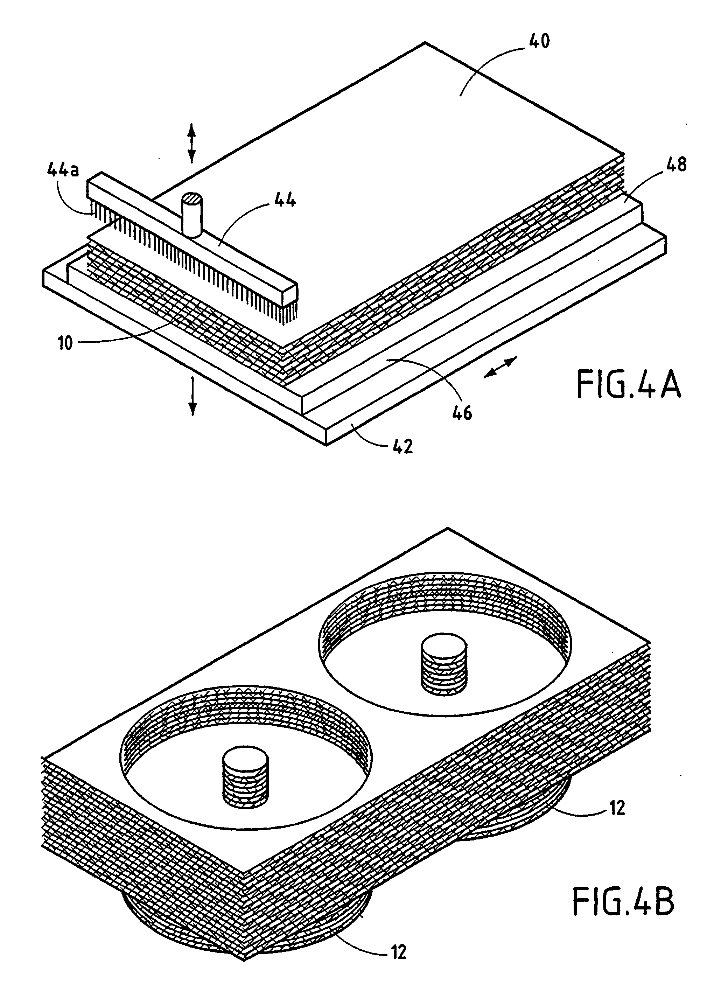

Dans un autre mode de réalisation illustré par les figures 4A et 4B, des strates planes 40 de feutre 10 par exemple rectangulaires sont empilées et aiguilletées au fur et à mesure de leur empilement.

Les strates reposent sur un support plan horizontal 42 muni d'un revêtement d'embase comprenant un feutre 46 et une feuille de séparation 48 similaires à ceux utilisés dans le mode de réalisation de la figure 2B.

L'aiguilletage est réalisé par une planche à aiguilles 44 qui s'étend horizontalement sur la largeur des strates 40. Les aiguilles 44a de la planche 44 sont réparties uniformément le long de celle-ci. A chaque fois qu'une nouvelle strate 40 est ajoutée, une passe d'aiguilletage est réalisée par déplacement relatif entre la planche à aiguilles 44 et le support 42, puis le support 42 est abaissé d'une distance correspondant à l'épaisseur d'une strate aiguilletée, de façon à maintenir constante la profondeur d'aiguilletage. Le mouvement relatif entre la planche à aiguilles 44 et le support 42 peut être obtenu par déplacement horizontal de la planche 44 suivant un mouvement de va-et-vient le long des strates 40. La vitesse de déplacement et la fréquence d'aiguilletage (fréquence du mouvement alternatif vertical de la planche 44) sont choisies pour obtenir la densité surfacique constante d'aiguilletage désirée.

Le processus est interrompu lorsque l'épaisseur des strates 40 empilées et aiguilletées atteint une valeur correspondant à celle de la structure tridimensionnelle annulaire désirée. Des passes d'aiguilletage de finition peuvent alors être réalisées comme décrit précédemment.

Ensuite, la structure tridimensionnelle recherchée 12 est obtenue par découpe, par exemple à l'emporte-pièce dans l'ensemble des strates 40 empilées et aiguilletées (figure 4B).

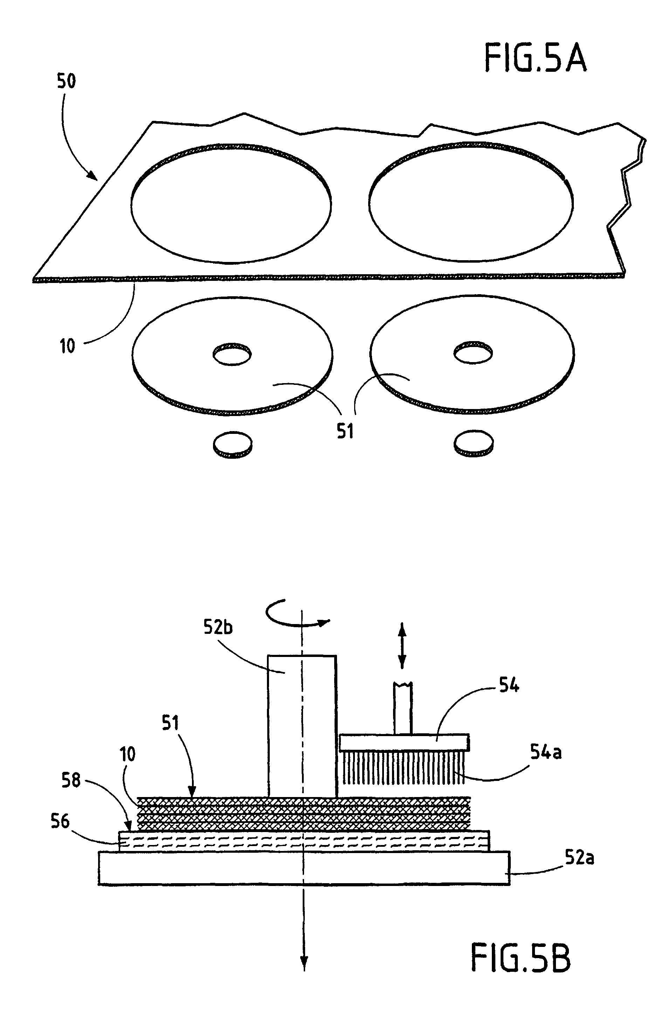

Les figures 5A et 5B illustrent encore un autre mode de réalisation d'une structure tridimensionnelle annulaire.

Dans ce cas, des anneaux 51 dont les diamètres intérieur et extérieur correspondent à ceux de la structure annulaire à réaliser sont découpés dans des strates 50 de feutre (figure 5A).

Les anneaux 51 sont empilés et aiguilletés en utilisant une installation semblable à celle de la figure 2B. Ainsi, les anneaux 51 sont empilés sur un plateau annulaire horizontal 52a duquel fait saillie un moyeu central 52b autour duquel les anneaux 51 sont placés. Le plateau 52a est muni d'un revêtement d'embase comprenant un feutre 56 et une feuille de séparation 58 similaires à ceux du mode de réalisation de la figure 2B.

Les anneaux 51 sont aiguilletés au moyen d'une planche à aiguilles 54 s'étendant horizontalement sur une distance correspondant à la dimension radiale des anneaux 51. Chaque anneau 51 est aiguilleté par rotation relative entre la planche à aiguilles 54 et le plateau 52a sur un tour complet autour de l'axe vertical du plateau 52a. Ensuite, le plateau 52a est abaissé d'une distance sensiblement égale à l'épaisseur d'un anneau aiguilleté. On notera que le mouvement relatif entre le plateau 52a et la planche à aiguilles 54 peut être obtenu par rotation du plateau 52a, comme dans le mode de réalisation de la figure 2B, ou par rotation de la planche à aiguilles.

Les aiguilles 54a de la planche 54 étant disposées comme celles de la planche 24, une densité d'aiguilletage surfacique constante peut être obtenue, ce qui, en combinaison avec une profondeur d'aiguilletage sensiblement constante, permet d'avoir une densité d'aiguilletage uniforme dans le volume dans la structure annulaire tridimensionnelle élaborée.

L'empilement et l'aiguilletage des anneaux 51 sont interrompus lorsque l'épaisseur atteinte correspond à celle de la structure tridimensionnelle annulaire désirée, des passes d'aiguilletage de finition pouvant être réalisées comme décrit précédemment. Une structure annulaire tridimensionnelle est ainsi directement obtenue.

On notera que l'aiguilletage à densité sensiblement constante, tel qu'effectué dans les différents modes de réalisation décrits ci-avant, relève des principes décrits dans les documents US-A-4 790 052 et FR-A-2 726 013.

En variante, l'aiguilletage des différentes couches de feutre peut être réalisé non pas individuellement sur chaque couche, mais après superposition de plusieurs couches. Dans ce cas, on réalise une ou plusieurs passes d'aiguilletage à chaque fois qu'un nombre prédéterminé de couches de feutre a été ajouté.

L'utilisation de couches de feutre et la liaison de celles-ci par aiguilletage permettent d'obtenir une structure dans laquelle les fibres sont orientées dans un nombre de directions non limité dans l'espace, c'est-à-dire une structure réellement tridimensionnelle. En outre, la densité d'aiguilletage peut être choisie de manière à transférer un nombre de fibres en Z (perpendiculairement aux couches) suffisamment élevé pour que la structure obtenue présente un caractère quasi isotrope.

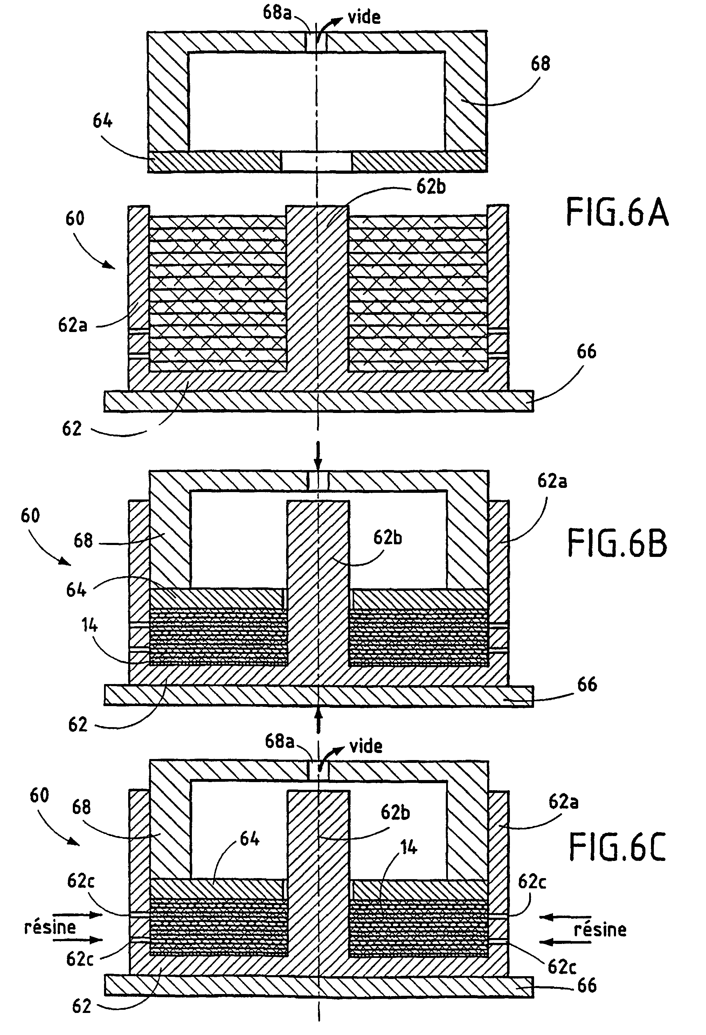

Les structures fibreuses tridimensionnelles annulaires obtenues par l'un quelconque des procédés ci-dessus sont comprimées en étant placées dans un outillage tel que représenté schématiquement sur les figures 6A à 6C.

L'outillage 60 utilisé comprend un élément de moule inférieur 62 et un élément de moule supérieur 64 reliés à des plateaux de presse respectifs 66, 68. Une structure 12 à comprimer est placée dans l'élément inférieur 62 qui comprend un rebord annulaire 62a et un moyeu central 62b entre lesquels la structure 12 est logée, et entre lesquels l'élément supérieur 64 de forme annulaire peut s'engager.

La compression est réalisée en abaissant l'élément de moule supérieur 64. Le volume de la structure annulaire 12 est réduit jusqu'à atteindre le taux volumique de fibres désiré dans la préforme. Cette réduction de volume peut atteindre 2 à 3 fois pour obtenir un taux volumique de fibres au moins égal à 20 %, de préférence au moins égal à 30 %. La compression peut être éventuellement assistée en reliant l'intérieur de l'outillage à une source de vide par exemple à travers un passage 68a formé dans la paroi supérieure de l'élément de moule supérieur.

La préforme comprimée obtenue 14 est maintenue dans sa forme par injection d'une composition d'imprégnation directement dans l'outillage 60. La composition d'imprégnation est constituée par exemple par une résine éventuellement en solution. On utilise une résine ayant un taux de coke non nul, par exemple une résine phénolique ou une résine furanique. L'injection est réalisée à travers des orifices 62c formés par exemple dans l'élément de moule inférieur 62 et peut être assistée en reliant l'intérieur de l'outillage à une source de vide par le passage 68a.

En variante, l'injection peut être réalisée dans l'outillage 60 après mise en place de la préforme, mais avant compression. On procédera de préférence ainsi lorsque des charges sont incorporées à la composition d'imprégnation et diminuent sa fluidité, la répartition uniforme de celle-ci au sein de la préforme étant plus aisée lorsque la porosité de la préforme est plus accessible.

La polymérisation de la résine, après compression, peut être effectuée par chauffage, les éléments de moule 62 et/ou 64 pouvant être munis de moyens de chauffage incorporés, par exemple de résistances électriques chauffantes. Après polymérisation de la résine, la préforme 14 consolidée est retirée de l'outillage 60.

Un traitement thermique de carbonisation est réalisé ensuite sur la préforme consolidée afin de carboniser la résine et, éventuellement, les fibres du feutre lorsque celles-ci sont en précurseur de carbone et n'ont pas été préalablement transformées en carbone. La carbonisation est par exemple effectuée à une température d'environ 900°C sous atmosphère neutre. La carbonisation de la résine laisse du carbone sous forme de coke de résine qui lie les fibres carbone de la préforme, de sorte que celle-ci conserve sa forme et peut être manipulée sans outillage de maintien.

Selon le taux de coke, la quantité et le taux de dilution de la résine injectée, la quantité de coke de résine obtenu pourra varier d'une valeur minimale nécessaire pour assurer la consolidation de la préforme jusqu'à une valeur plus importante réalisant une densification partielle substantielle de la préforme.

La densification de la préforme est ensuite au moins en partie réalisée ou poursuivie par infiltration chimique en phase vapeur, de façon bien connue en soi, afin de déposer une matrice de carbone pyrolytique qui complète le coke de résine. D'autres techniques connues de densification sont utilisables, par exemple la voie liquide ou une infiltration voie gazeuse par vaporisation d'un précurseur liquide dans lequel la préforme chauffée est immergée.

De préférence, la compression des couches de feutre puis la consolidation et la densification de la préforme fibreuse sont réalisées de manière à obtenir un disque en composite C-C comprenant, en volume, environ 25 à 30 % de fibres, environ 15 à 20 % de coke de résine, environ 35 à 45 % de carbone pyrolytique et environ 15 à 20 % de porosité résiduelle.

Le disque 16 en composite C-C obtenu est usiné à ses dimensions définitives. Il comporte une âme 16a (figure 1) avec une partie de friction 16b située d'un côté ou de chaque côté de l'âme, selon qu'il s'agit d'un disque à une ou deux faces frottantes. Des encoches (non représentées) sont pratiquées le long de la couronne intérieure ou extérieure de l'âme pour permettre la liaison mécanique entre le disque et un organe auquel il est lié en rotation.

On notera que l'élaboration d'une structure tridimensionnelle annulaire à partir d'une texture fibreuse de base sous forme d'un feutre est d'un coût moins élevé qu'avec des tissus ou des complexes de nappes unidirectionnelles dont le coût de fabrication est plus grand, surtout lorsque des chutes de découpe sont absentes, ou minimes. En outre, l'imprégnation par une résine permet à la fois de consolider la préforme, donc de se passer d'outillages de maintien lors de l'infiltration chimique en phase vapeur, et de former une partie de la matrice carbone, donc de réduire la durée restante de densification.

Le renfort fibreux du disque, constitué par la préforme, peut être en fibres de carbone de même nature ou de plusieurs natures différentes. De préférence, des fibres de carbone à haute résistance sont utilisées pour la partie de la préforme correspondant à l'âme du disque puisque c'est l'âme qui assure la transmission des efforts de frottement. Des fibres de carbone à haute résistance sont notamment des fibres à précurseur polyacrylonitrile préoxydé, ou à précurseur brai anisotrope. Comme déjà indiqué, des fibres de carbone bas module pourront par contre être utilisées au moins en partie pour la ou chaque partie de préforme correspondant à la ou chaque partie de friction du disque, afin de diminuer la rigidité transversale. Des fibres de carbone à bas module sont notamment des fibres à précurseur phénolique, ou à précurseur cellulosique ou à précurseur brai isotrope.

Pour obtenir des renforts fibreux avec des fibres de carbone provenant de précurseur différents dans l'épaisseur du disque, on réalise de préférence des préformes fibreuses par compression de structures annulaires formées de strates empilées comme dans le mode de réalisation des figures 4A, 4B et 5A, 5B. Les premières et/ou dernières strates de l'empilement, qui correspondent à la et/ou chaque partie de friction du disque, sont alors constituées de feutre de composition différente de celui formant les strates intermédiaires qui correspondent à l'âme du disque.

A titre d'exemple, on peut utiliser pour les premières et/ou dernières strates empilées un feutre formé d'un mélange de fibres de carbone ou de précurseur de carbone à base polyacrylonitrile (PAN) préoxydé et à base phénolique, tandis que le feutre des strates intermédiaires est formé de fibres de carbone ou de précurseur de carbone à base polyacrylonitrile préoxydé.

### Exemple 1

Un disque de frein à deux faces frottantes pour un dispositif de freinage de véhicule automobile est réalisé en empilant à plat et en aiguilletant, successivement, trente-deux couches de feutre formées de fibres de PAN préoxydé et ayant un taux de fibres environ égal à 21 %. Chaque couche de feutre a une épaisseur à l'état relaxé (avant aiguilletage et compression) d'environ 5 mm.

Les couches de feutre sont aiguilletées une à une avec profondeur d'aiguilletage sensiblement constante comme décrit dans le document FR-A-2 584 106 ou FR-A-2 726 013, de sorte qu'une structure fibreuse ayant une densité volumique d'aiguilletage sensiblement constante est obtenue. Il est procédé ensuite à une carbonisation pour transformer les précurseurs des fibres en carbone. Après carbonisation à environ 1600°C, le taux de fibres est environ égal à 12 %.

La structure en fibres de carbone obtenue est découpée en anneau de diamètres intérieur et extérieur égaux respectivement à 180 et 360 mm, comme dans le mode de réalisation de la figure 4B. La structure est comprimée dans un moule jusqu'à réduire son volume d'environ 2,3 fois pour atteindre une épaisseur de 28 mm, ce qui amène le taux volumique de fibres à environ 29 %, et est maintenue dans sa forme par injection de résine phénolique en solution aqueuse puis polymérisation de la résine. La préforme est retirée du moule puis soumise à traitement thermique pour carboniser la résine. La quantité de résine phénolique introduite est déterminée de manière à obtenir un coke de résine occupant environ 25 % du volume de la préforme consolidée, la masse volumique apparente de la préforme consolidée étant égale à environ 0,9 g/cm³. La densification est poursuivie, par infiltration chimique en phase vapeur jusqu'à ce que le carbone pyrolytique déposé au sein de la préforme consolidée représente environ 36 % en volume, laissant une porosité résiduelle de 10 % en volume environ. On notera que la carbonisation de la résine phénolique peut être effectuée pendant la montée en température précédant le processus de densification.

Le disque en composite C-C obtenu a une densité égale à 1,65 g/cm³. Il est essayé en friction au banc avec des plaquettes de frein également en composite C-C. Les plaquettes sont fabriquées par densification de préforme élaborée par suraiguilletage de nappes de fibres en carbone à précurseur phénolique, le suraiguilletage étant réalisé pour obtenir un taux volumique de fibres d'environ 50 %.

Les essais réalisés montrent une remarquable stabilité du couple de freinage et une usure régulière et modérée, n'induisant aucune vibration indésirable.

### Exemple 2

On procède comme dans l'exemple 1, mais en empilant à plat et en aiguilletant, successivement, vingt-trois couches de feutre formées de fibres à précurseur PAN préoxydé.

Après carbonisation des fibres et découpe en anneau, la préforme est comprimée jusqu'à réduire son volume d'environ 1,8 fois pour atteindre une épaisseur de 22 mm et un taux volumique de fibres de 23 % environ. L'imprégnation par la résine phénolique est réalisée de sorte que, après polymérisation de la résine et carbonisation, on obtient une préforme consolidée avec un taux de coke d'environ 40 % et une masse volumique apparente d'environ 1 g/cm³

La préforme consolidée est ensuite densifiée par du carbone pyrolytique déposé par infiltration chimique en phase vapeur jusqu'à ce que le carbone pyrolytique représente environ 27 % en volume, laissant une porosité résiduelle de 10 % en volume environ. La masse volumique finale est égale à environ 1,6 g/cm³. Le disque obtenu est essayé dans des conditions similaires à celles de l'exemple 1. On relève à nouveau une bonne stabilité du couple de freinage et une absence de vibrations indésirables.

### Exemple 3

On procède comme dans l'exemple 1, à la différence qu'après aiguilletage, mais avant compression, la préforme est imprégnée par aspiration avec une solution diluée de résine phénolique. On laisse ensuite évaporer le solvant (en l'espèce de l'éthanol), puis la préforme est comprimée dans le moule. La suite du processus est inchangée.

La quantité de résine phénolique introduite et la compression sont telles que la préforme consolidée et carbonisée obtenue a un taux de fibres de *25 %* et un taux de coke de 15 %, laissant une porosité de 60 % en volume, et une masse volumique apparente de 0,67 g/cm³.

La densification par infiltration chimique en phase vapeur est effectuée jusqu'à ce que le carbone pyrolytique déposé représente environ 50 % en volume, laissant une porosité résiduelle d'environ 10 % et aboutissant à une masse volumique de 1,73 g/cm³ environ. Les essais effectués ensuite donnent toute satisfaction tant sur la stabilité du couple de freinage que sur l'absence de vibrations indésirables.

### Exemple 4

On réalise une structure fibreuse aiguilletée comme dans l'exemple 1. Plusieurs échantillons sont découpés. Chaque échantillon est placé dans un outillage et une résine furanique est injectée dans l'outillage, avant compression. La compression est réalisée à froid puis, la préforme étant maintenue sous pression, la résine est réticulée en portant la température à environ 150°C.

La préforme ainsi consolidée est soumise à un traitement thermique à une température d'environ 900°C pour transformer la résine en carbone. La densification par une matrice carbone est ensuite complétée par infiltration chimique en phase vapeur.

Le tableau ci-après donne des valeurs de taux de coke, le taux de carbone pyrolytique (PyC) obtenu par infiltration chimique en phase vapeur, de masse volumique finale, de porosité finale et de contrainte à rupture en (à compléter) pour différents échantillons comprimés sous des pression différentes donnant, après compression, des taux de fibres respectivement égaux à 20 %, 25 % et 30 %. Le tableau montre l'influence du taux de fibres sur la contrainte mesurée.

| Taux de fibres (%) | Taux de coke (%) | Taux de PyC (%) | Masse volumique finale (g/cm³) | Porosité finale (%) | Contrainte MPa |
|---|---|---|---|---|---|
| 20 | 13 | 44 | 1,45 | 23 | 35 |
| 25 | 15 | 41 | 1,50 | 19 | 40 |
| 30 | 13 | 40 | 1,54 | 17 | 60 |

### Exemple 5

On réalise une structure fibreuse aiguilletée comme dans l'exemple 1. Plusieurs échantillons sont découpés. Chaque échantillon est placé dans un outillage, comprimé jusqu'à obtenir un taux volumique de fibres environ égal à 30 %.

Après compression, une résine phénolique est injectée dans l'outillage. Différents échantillons sont utilisés en faisant varier le taux de dilution de la résine phénolique dans de l'eau. La préforme imprégnée est consolidée par polymérisation de la résine, puis retirée de l'outillage pour être soumise à un traitement thermique de carbonisation de la résine. La densification par la matrice carbone est complétée par infiltration chimique en phase vapeur. Le tableau ci-après donne les valeurs du taux de coke, du taux de carbone pyrolytique, la masse volumique et la densité mesurée.

| Taux de dilution de la résine (% volumique) | Taux de fibres (%) | Taux de coke (%) | Taux de PyC (%) | Masse volumique finale (g/cm³) | Porosité finale (%) |
|---|---|---|---|---|---|
| 0 | 30 | 32 | 23 | 1,36 | 15 |
| 20 | 30 | 27 | 28 | 1,47 | 15 |
| 40 | 30 | 23 | 32 | 1,50 | 15 |

Ce tableau montre la possibilité d'ajuster les quantités respectives de coke de résine et carbone pyrolytique au sein de la matrice.

### Exemple 6

On procède comme dans l'exemple 3 à la différence que la structure fibreuse est obtenue en empilant et aiguilletant successivement:
- 10 couches de feutre formé à 70 % en volume de fibres en précurseur de carbone constitué par du PAN préoxydé et à 30 % en volume de fibres en précurseur carbone de type phénolique ("Kynol"),
- 12 couches de feutre formé de fibres de PAN préoxydé, et
- 10 couches de feutre identique à celui constituant les 10 premières couches.

Les essais effectués au banc sur le disque obtenu montrent une remarquable stabilité du couple de freinage et l'absence totale de vibrations indésirables, auxquelles contribue la présence de fibres carbone bas module dans les parties d'usure du disque adjacentes aux faces de frottement.

## Revendications

1. Procédé de fabrication d'une pièce en matériau composite carbone-carbone comprenant la formation d'une structure fibreuse tridimensionnelle, la compression de la structure fibreuse pour obtenir une préforme fibreuse ayant une forme voisine de celle de la pièce à fabriquer, le maintien de la préforme dans son état comprimé et la densification de la préforme, **caractérisé en ce que** :
- la structure fibreuse tridimensionnelle est formée en superposant des couches de feutre et en les liant entre elles par aiguilletage, puis
- la compression de la structure fibreuse est réalisée de manière à obtenir une préforme ayant un taux volumique de fibres au moins égal à 20 %,
- la préforme est maintenue dans son état comprimé par consolidation après imprégnation par une composition liquide contenant un agent de liaison capable de lier les fibres de la préforme entre elles, l'imprégnation étant réalisée après formation de la structure fibreuse tridimensionnelle par aiguilletage, et
- la préforme consolidée est densifiée par une matrice en carbone.

2. Procédé selon la revendication 1, **caractérisé en ce que** la structure fibreuse tridimensionnelle est formée en superposant et aiguilletant des couches de feutre ayant un taux volumique de fibres compris entre 7 % et 15 %.

3. Procédé selon l'une quelconque des revendications 1 et 2, **caractérisé en ce que** la structure fibreuse tridimensionnelle est formée en superposant et aiguilletant des couches de feutre constituées de fibres ayant une longueur moyenne comprise entre 10 mm et 100 mm.

4. Procédé selon l'une quelconque des revendications 1 à 3, **caractérisé en ce que** les couches de feutre sont aiguilletées au fur et à mesure de leur superposition.

5. Procédé selon la revendication 4, **caractérisé en ce que** chaque couche de feutre est aiguilletée, et le nombre de coups d'aiguille par unité de surface ainsi que la profondeur de pénétration des aiguilles dans la structure fibreuse en cours de formation sont contrôlés de manière à obtenir une densité d'aiguilletage prédéterminée dans l'épaisseur de la structure fibreuse.

6. Procédé selon la revendication 5, **caractérisé en ce que** le nombre de coups d'aiguilles par unité de surface et la profondeur de pénétration des aiguilles sont contrôlés de manière à obtenir une densité d'aiguilletage constante dans toute l'épaisseur de la structure fibreuse conférant à celle-ci un caractère quasi isotrope.

7. Procédé selon l'une quelconque des revendications 1 à 6, **caractérisé en ce que** l'imprégnation par une composition liquide est réalisée avant compression de la structure fibreuse.

8. Procédé selon l'une quelconque des revendications 1 à 6, **caractérisé en ce que** l'imprégnation par une composition liquide est réalisée après compression de la structure fibreuse.

9. Procédé selon l'une quelconque des revendications 1 à 8, **caractérisé en ce que** le maintien de la préforme à l'état comprimé comprend l'injection de la composition liquide contenant un agent de liaison à l'intérieur d'un outillage dans lequel la préforme est comprimée.

10. Procédé selon l'une quelconque des revendications 1 à 9, **caractérisé en ce que** le maintien de la préforme à l'état comprimé comprend l'imprégnation de la préforme par une composition liquide contenant une résine.

11. Procédé selon la revendication 10, **caractérisé en ce que** l'on utilise une résine ayant un taux de coke non nul, et la résine est carbonisée par traitement thermique effectué sur la préforme avant sa densification par infiltration chimique en phase vapeur.

12. Procédé selon l'une quelconque des revendications 1 à 11, pour la fabrication d'une pièce annulaire en matériau composite carbone-carbone, **caractérisé en ce que** l'on forme une structure fibreuse tridimensionnelle annulaire par bobinage d'une bande de feutre en couches superposées liées par aiguilletage.

13. Procédé selon la revendication 12, **caractérisé en ce que** l'on réalise un bobinage hélicoïdal en spires à plat d'une bande de feutre déformable.

14. Procédé selon la revendication 13, **caractérisé en ce que** l'on utilise une bande de feutre munie d'entailles en V à partir d'un de ses côtés destiné à former la circonférence intérieure de la structure annulaire.

15. Procédé selon la revendication 12, **caractérisé en ce que** l'on bobine une bande de feutre en couches superposées sur un mandrin cylindrique.

16. Procédé selon la revendication 15, **caractérisé en ce que** l'on forme un manchon cylindrique par bobinage d'une bande de feutre en couches superposées sur un mandrin cylindrique, et liaison des couches entre elles par aiguilletage, et l'on découpe le manchon suivant des plans perpendiculaires à son axe pour obtenir des structures tridimensionnelles annulaires.

17. Procédé selon l'une quelconque des revendications 1 à 11, pour la fabrication d'une pièce annulaire, **caractérisé en ce que** l'on forme une structure fibreuse tridimensionnelle annulaire par empilement à plat de strates de feutre et liaison des strates entre elles par aiguilletage.

18. Procédé selon la revendication 17, **caractérisé en ce que** l'on utilise des strates pleines et l'on obtient la structure annulaire par découpe après empilement et aiguilletage des strates.

19. Procédé selon la revendication 17, **caractérisé en ce que** l'on utilise des strates annulaires prédécoupées.

20. Procédé selon la revendication 19, **caractérisé en ce que** l'on récupère les fibres provenant des chutes de découpe des strates pour former du feutre.

21. Procédé selon l'une quelconque des revendications 1 à 20, **caractérisé en ce que** l'on utilise un feutre en fibres de précurseur de carbone et l'on transforme le précurseur en carbone par traitement thermique sur la préforme aiguilletée.

22. Procédé selon l'une quelconque des revendications 1 à 21, **caractérisé en ce que** l'on utilise au moins un feutre en fibres de carbone ou de précurseur de carbone à base polyacrylonitrile préoxydé, ou à base phénolique, ou à base cellulosique, ou à base brai isotrope, ou à base brai anisotrope.

23. Procédé selon la revendication 22, **caractérisé en ce que** l'on utilise au moins un feutre en fibres de carbone provenant de précurseurs différents, ou en fibres de différents précurseurs de carbone.

24. Procédé selon l'une quelconque des revendications 1 à 23, **caractérisé en ce que** l'on utilise des feutres de natures différentes pour différentes parties de la structure fibreuse.

25. Procédé selon la revendication 24 pour la fabrication d'un disque de frein ayant une âme et au moins une partie de friction d'un côté de l'âme, **caractérisé en ce que** l'on utilise un feutre en fibres de carbone ou de précurseur de carbone à base polyacrylonitrile préoxydé ou à base brai anisotrope pour la partie de la structure correspondant à l'âme du disque et un feutre comprenant au moins en partie des fibres de carbone ou de précurseur de carbone à base phénolique ou à base cellulosique ou à base brai isotrope pour la ou chaque partie de la structure correspondant à une partie de friction du disque.

## Patentansprüche

1. Verfahren zum Herstellen eines Werkstücks aus Kohlenstoff-Kohlenstoff-Verbundwerkstoff, umfassend die Bildung einer dreidimensionalen Faserstruktur, das Komprimieren der Faserstruktur, um einen Faservorformling einer Gestalt ähnlich derjenigen des herzustellenden Teils zu erhalten, das Halten des Vorformlings in einem komprimierten Zustand, und das Verdichten des Vorformlings, **dadurch gekennzeichnet, dass**
- die dreidimensionale Faserstruktur gebildet wird, indem Filzlagen übereinandergelegt werden und diese untereinander durch Nadelung verbunden werden, anschließend
- das Komprimieren der Faserstruktur in der Weise durchgeführt wird, dass ein Vorformling mit einem Faservolumenanteil von mindestens 20% erhalten wird,
- der Vorformling in seinem komprimierten Zustand dadurch gehalten wird, dass er nach dem Imprägnieren mit einer Flüssigzusammensetzung, die ein Bindemittel zum Verbinden der Fasern des Vorformlings untereinander enthält, verfestigt wird, wobei das Imprägnieren stattfindet, nachdem die dreidimensionale Faserstruktur durch Nadelung gebildet ist, und
- der verfestigte Vorformling durch eine Kohlenstoffmatrix verdichtet wird.

2. Verfahren nach Anspruch 1, **dadurch gekennzeichnet, dass** die dreidimensionale Faserstruktur dadurch gebildet wird, dass Filzlagen, die einen Faservolumenanteil zwischen 7% und 15% haben, übereinandergelegt und genadelt werden.

3. Verfahren nach einem der Ansprüche 1 und 2, **dadurch gekennzeichnet, dass** die dreidimensionale Faserstruktur dadurch gebildet wird, dass Filzlagen aus Fasern mit einer mittleren Länge zwischen 10 mm und 100 mm übereinandergelegt und genadelt werden.

4. Verfahren nach einem der Ansprüche 1 bis 3, **dadurch gekennzeichnet, dass** die Filzlagen nach Maßgabe ihres Übereinanderlegens genadelt werden.

5. Verfahren nach Anspruch 4, **dadurch gekennzeichnet, dass** jede Filzlage genadelt wird und die Anzahl von Nadelstichen pro Oberflächeneinheit und die Eindringtiefe der Nadeln in die Faserstruktur im Zuge der Fertigung in der Weise gesteuert werden, dass innerhalb der Dicke der Faserstruktur eine vorbestimmte Nadelungsdichte erzielt wird.

6. Verfahren nach Anspruch 5, **dadurch gekennzeichnet, dass** die Anzahl der Nadelstiche pro Flächeneinheit und die Eindringtiefe der Nadeln in der Weise gesteuert werden, dass eine konstante Nadelungsdichte in jeder Dicke der Faserstruktur erhalten wird, welche dieser eine quasi-isotrope Beschaffenheit verleiht.

7. Verfahren nach einem der Ansprüche 1 bis 6, **dadurch gekennzeichnet, dass** das Imprägnieren mit einer Flüssigzusammensetzung vor dem Komprimieren der Faserstruktur erfolgt.

8. Verfahren nach einem der Ansprüche 1 bis 6, **dadurch gekennzeichnet, dass** das Imprägnieren mit einer Flüssigzusammensetzung nach dem Komprimieren der Faserstruktur erfolgt.

9. Verfahren nach einem der Ansprüche 1 bis 8, **dadurch gekennzeichnet, dass** das Halten des Vorformlings in einem komprimierten Zustand das Injizieren der ein Bindemittel enthaltenden Flüssigzusammensetzung in das Innere eines Werkzeugs, in welchem der Vorformling komprimiert wird, beinhaltet.

10. Verfahren nach einem der Ansprüche 1 bis 9, **dadurch gekennzeichnet, dass** das Halten des Vorformlings in dem komprimierten Zustand das Imprägnieren des Vorformlings mit einer ein Harz enthaltenden Flüssigzusammensetzung beinhaltet.

11. Verfahren nach Anspruch 10, **dadurch gekennzeichnet, dass** man ein Harz mit einem von Null verschiedenen Koksanteil verwendet, wobei das Harz durch eine Wärmebehandlung verkohlt wird, welcher der Vorformling ausgesetzt wird, bevor er durch chemisches Infiltrieren aus der Dampfphase verdichtet wird.

12. Verfahren nach einem der Ansprüche 1 bis 11 für die Fertigung eines ringförmigen Werkstücks aus Kohlenstoff-Kohlenstoff-Verbundwerkstoff, **dadurch gekennzeichnet, dass** man eine dreidimensionale ringförmige Faserstruktur durch Wickeln eines Filzbandes zu übereinanderliegenden Lagen, die durch Nadelung untereinander verbunden sind, herstellt.

13. Verfahren nach Anspruch 12, **dadurch gekennzeichnet, dass** man eine spiralförmige Wicklung mit abgeflachten Windungen aus einem verformbaren Filzband herstellt.

14. Verfahren nach Anspruch 13, **dadurch gekennzeichnet, dass** man ein Filzband verwendet, welches an einer seiner Seiten, die zur Ausbildung des Innenumfangs der Ringstruktur vorgesehen ist, mit V-förmigen Kerben versehen ist.

15. Verfahren nach Anspruch 12, **dadurch gekennzeichnet, dass** man ein Filzband in übereinanderliegenden Lagen auf einen zylindrischen Wickeldorn wickelt.

16. Verfahren nach Anspruch 15, **dadurch gekennzeichnet, dass** man eine zylindrische Hülse bildet durch Wickeln eines Filzbandes in übereinanderliegenden Lagen auf einem zylindrischen Wickeldorn, und Lagen untereinander durch Nadelung verbindet, und dass man die Hülse in Ebenen schneidet, die rechtwinklig zu der Achse der Hülse verlaufen, um ringförmige dreidimensionale Strukturen zu erhalten.

17. Verfahren nach einem der Ansprüche 1 bis 11 zur Herstellung eines ringförmigen Werkstücks, **dadurch gekennzeichnet, dass** man eine dreidimensionale, ringförmige Faserstruktur bildet, indem man flache Filzschichten stapelt und die Schichten untereinander durch Nadelung verbindet.

18. Verfahren nach Anspruch 17, **dadurch gekennzeichnet, dass** man flache Schichten verwendet und eine ringförmige Struktur durch Schneiden nach dem Stapeln und der Nadelung der Schichten erhält.

19. Verfahren nach Anspruch 17, **dadurch gekennzeichnet, dass** man vorgeschnittene ringförmige Schichten verwendet.

20. Verfahren nach Anspruch 19, **dadurch gekennzeichnet, dass** man die aus dem Verschnitt der Schichten stammenden Fasern zur Herstellung des Filzes wiederverwendet.

21. Verfahren nach einem der Ansprüche 1 bis 20, **dadurch gekennzeichnet, dass** man einen Filz aus Fasern des Kohlenstoff-Vorläufers verwendet und man das Vorläufermaterial durch Wärmebehandlung des genadelten Vorformlings in Kohlenstoff umwandelt.

22. Verfahren nach einem der Ansprüche 1 bis 21, **dadurch gekennzeichnet, dass** man mindestens einen Filz aus Kohlenstofffasern oder Kohlenstoff-Vorläufermaterial-Fasern auf der Basis von voroxidiertem Polyacrylnitril oder Phenol oder Zellulose oder isotropem Pech oder anisotropem Pech verwendet.

23. Verfahren nach Anspruch 22, **dadurch gekennzeichnet, dass** man mindestens einen Filz aus Fasern von Kohlenstoff verwendet, der von unterschiedlichen Vorläufermaterialien stammt, oder aus Fasern unterschiedlicher Kohlenstoff-Vorläufermaterialien.

24. Verfahren nach einem der Ansprüche 1 bis 23, **dadurch gekennzeichnet, dass** man unterschiedliche Arten von Filz für unterschiedliche Teile der Faserstruktur verwendet.

25. Verfahren nach Anspruch 24 zur Herstellung einer Bremsscheibe, die einen Kern und mindestens einen Reibungsteil an einer Seite des Kerns aufweist, **dadurch gekennzeichnet, dass** man einen Filz aus Kohlenstofffasern oder Kohlenstoffvorläufermaterial-Fasern auf der Grundlage von voroxidiertem Polyacrylnitril oder auf der Grundlage von anisotropem Pech für denjenigen Teil der Struktur verwendet, der dem Kern der Scheibe entspricht, und man einen Filz, der mindestens teilweise Kohlenstofffasern oder Kohlenstoffvorläufermaterial-Fasern auf der Grundlage von Phenol oder Zellulose oder isotropem Pech enthält, für den oder jeden Teil der Struktur verwendet, der einem Reibungsteil der Scheibe entspricht.

## Claims

1. A method of manufacturing a part made of carbon-carbon composite material, the method comprising forming a three-dimensional fibre structure, compressing the fibre structure to obtain a fibre preform of shape close to that of the part to be manufactured, holding the preform in its compressed state, and densifying the preform, the method being **characterised in that**:
- the three-dimensional fibre structure is formed by superposing layers of felt and by bonding them together by needling; then
- the fibre structure is compressed so as to obtain a preform having a fibre volume fraction of not less than 20%;
- the preform is held in its compressed state by consolidation after impregnating it with a liquid composition containing a bonding agent capable of bonding together the fibres of the perform, with impregnation being carried out after the three-dimensional fibre structure has been formed by needling; and
- the consolidated perform is densified by a carbon matrix.

2. A method according to claim 1, **characterised in that** the three-dimensional fibre structure is formed by superposing and needling felt layers having a fibre volume fraction lying in the range 7% to 15%.

3. A method according to claim 1 or 2, **characterised in that** the three-dimensional fibre structure is formed by superposing and needling layers of felt constituted by fibres having a mean length lying in the range 10 mm to 100 mm.

4. A method according to any one of claims 1 to 3, **characterised in that** the layers of felt are needled as they are superposed.

5. A method according to claim 4, **characterised in that** each layer of felt is needled, and the number of needle strokes per unit area and the penetration depth of the needles in the fibre structure being formed are controlled so as to obtain needling of predetermined density in the thickness of the fibre structure.

6. A method according to claim 5, **characterised in that** the number of needle strokes per unit area and the penetration depth of the needles are controlled so as to obtain constant needling density through the entire thickness of the fibre structure, thereby imparting a quasi-isotropic character thereto.

7. A method according to any one of claims 1 to 6, **characterised in that** the fibre structure is impregnated with a liquid composition prior to being compressed.

8. A method according to any one of claims 1 to 6, **characterised in that** the fibre structure is impregnated with a liquid composition after being compressed.

9. A method according to any one of claims 1 to 8, **characterised in that** the preform is held in the compressed state by injecting the liquid composition containing the bonding agent inside tooling in which the preform is compressed.

10. A method according to any one of claims 1 to 9, **characterised in that** the holding of the preform in the compressed state comprises impregnating the preform with a liquid composition containing a resin.

11. A method according to claim 10, **characterised in that** a resin is used having a non-zero coke content, and the resin is carbonized by heat treatment performed on the preform prior to densification thereof by chemical vapor infiltration.

12. A method according to any one of claims 1 to 11, for manufacturing an annular part out of carbon-carbon composite material, the method being **characterised in that** an annular three-dimensional fibre structure is formed by winding a strip of felt into superposed layers that are bonded by needling.

13. A method according to claim 12, **characterised in that** a deformable felt strip is wound helically in flat turns.

14. A method according to claim 13, **characterised in that** a strip of felt is used that is provided with V-shaped notches in one of its sides that is designed to constitute the inside circumference of the annular structure.

15. A method according to claim 12, **characterised in that** a strip of felt is wound in superposed layers on a cylindrical mandrel.

16. A method according to claim 15, **characterised in that** a cyclical sleeve is formed by winding a strip of felt in superposed layers on a cylindrical mandrel, and the layers are bonded to one another by needling, and the sleeve is sliced in planes perpendicular to its axis to obtain annular three-dimensional structures.

17. A method according to any one of claims 1 to 11, for manufacturing an annular part, the method being **characterised in that** an annular three-dimensional fibre structure is formed by stacking flat plies of felt and by bonding the plies to one another by needling.

18. A method according to claim 17, **characterised in that** full plies are used and **in that** the annular structure is obtained by cutting out after the plies have been stacked and needled.

19. A method according to claim 17, **characterised in that** annular plies are used that have been cut out previously.

20. A method according to claim 19, **characterised in that** the fibres coming from the waste of cutting out plies are used to form the felt.

21. A method according to any one of claims 1 to 20, **characterised in that** a felt is used that is made of carbon precursor fibres and the carbon precursor is transformed by heat treatment applied to the needled preform.

22. A method according to any one of claims 1 to 21, **characterised in that** at least one felt is used made of carbon or carbon precursor fibres based on pre-oxidized polyacrylonitrile, or based on phenol, or based on cellulose, or based on isotropic pitch, or based on anisotropic pitch.

23. A method according to claim 22, **characterised in that** at least one felt is used made of carbon fibres coming from different precursors, or made of different carbon precursor fibres.

24. A method according to any one of claims 1 to 23, **characterised in that** felts of different kinds are used for different portions of the fibre structure.

25. A method according to claim 24, for manufacturing a brake disk having a core and at least one friction portion on one side of the core, the method being **characterised in that** a felt is used made of carbon or carbon precursor fibres based on pre-oxidized polyacrylonitrile or based on anisotropic pitch for the portion of the structure corresponding to the core of the disk, and a felt is used comprising at least some carbon or carbon precursor fibres based on phenol or on cellulose or on isotropic pitch for the, or each, portion of the structure corresponding to a friction portion of the disk.
